(19) Europäisches Patentamt
European Patent Office
Office européen des brevets

(11) **EP 2 638 286 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(21) Anmeldenummer: **12705260.3**

(22) Anmeldetag: **14.02.2012**

(51) Int Cl.:
*F03G 6/06* [(2006.01)]

(86) Internationale Anmeldenummer:
**PCT/EP2012/052488**

(87) Internationale Veröffentlichungsnummer:
**WO 2012/119840 (13.09.2012 Gazette 2012/37)**

(54) **SOLARTHERMISCHES KRAFTWERK**

SOLAR THERMAL POWER PLANT

CENTRALE HÉLIOTHERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2011 DE 102011005142**

(43) Veröffentlichungstag der Anmeldung:
**18.09.2013 Patentblatt 2013/38**

(73) Patentinhaber: **Siemens Aktiengesellschaft 80333 München (DE)**

(72) Erfinder: **HAJE, Detlef 02828 Görlitz (DE)**

(56) Entgegenhaltungen:
**EP-A1- 2 037 192        DE-A1-102009 056 707**
**DE-U1-202008 002 599**

**Beschreibung**

Die Erfindung betrifft ein solarthermisches Kraftwerk nach dem Oberbegriff des Patentanspruchs 1.

Solarthermische Kraftwerke, wie die Druckschrift DE 102009056707, werden häufig in Parabolrinnenbauweise ausgeführt. Dabei sind Wärmeträgerleitungen im Brennpunkt der Parabolrinnen angeordnet. Die Parabolrinnen werden dem Sonnenstand nachgeführt, so dass stets eine möglichst optimale Einstrahlung erzielt wird. Üblicherweise werden in sogenannten Farm-Kraftwerken eine Vielzahl von Parabolrinnen zu einem Solarfeld zusammengefasst.
Eine andere Art von solarthermischen Kraftwerken sind die Turmkraftwerke, bei denen eine Bündelung der Einstrahlung auf eine zentrale Einstrahlfläche auf dem Turm erfolgt.

Durch die Wärmeträgerleitungen in solarthermischen Kraftwerken welche in Parabolrinnenbauweise ausgebildet sind, fließt ein Fluid, welches als Wärmeträger dient und deshalb nachfolgend auch als Wärmeträgerfluid bezeichnet wird. Für Temperaturen bis ca. 400 °C wird Öl, darüber hinaus schmelzflüssiges Salz als Wärmeträgerfluid verwendet.

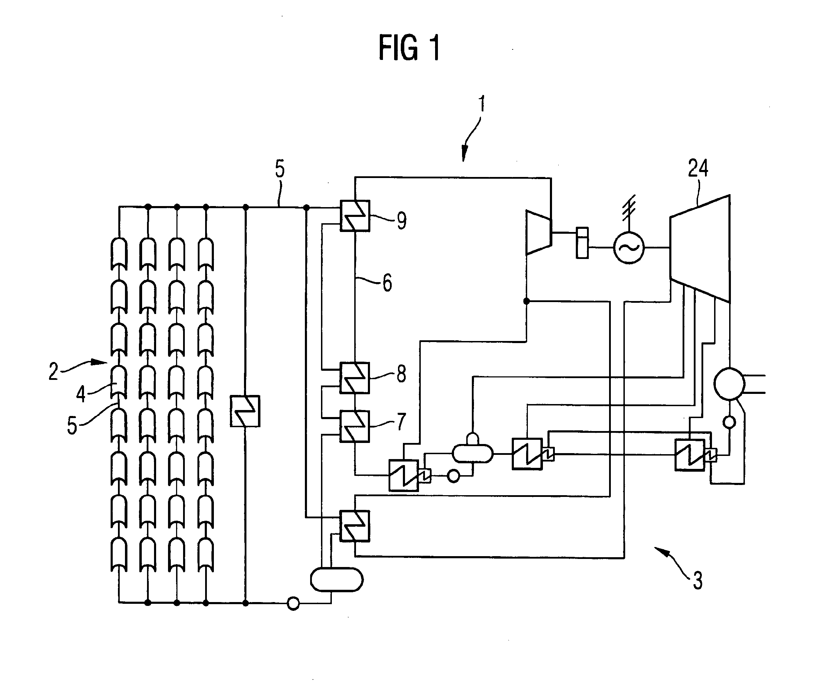

Das Wärmeträgerfluid gibt einen Teil seiner Wärmeenergie über Wärmetauscher an einen Wasser-Dampf-Kreislauf ab, welcher zum Betreiben einer Dampfturbine dient. Hierzu wird das Wärmeträgerfluid im Gegenstrom zum Wasser-Dampf-Kreislauf geführt. Figur 1 zeigt den prinzipiellen Aufbau eines aus dem Stand der Technik bekannten solarthermischen Kraftwerks. Das solarthermische Kraftwerk 1 umfasst die bereits beschriebene Parabolrinnenanordnung 2, die aus den Parabolrinnen 4 und den in ihren Brennpunkt angeordneten Wärmeträgerleitungen 5 besteht. Die Wärmeträgerleitungen 5 sind mit einem Wärmeträgerfluid als Wärmeträger gefüllt. Des Weiteren umfasst das solarthermische Kraftwerk 1 eine Dampfturbinenanordnung 3, welche im Prinzip wie eine normale Dampfturbine aufgebaut ist, d. h. die Dampfturbine umfasst neben der eigentlichen Turbine 24 mehrere Bauteile zur Dampfleitung bzw. zur Dampfkondensation. Auf die genaue Funktionsweise einer Dampfturbine soll hier nicht näher eingegangen werden, da diese hinlänglich aus dem Stand der Technik bekannt ist.

Die solare Dampferzeugung erfolgt im Wasserdampf-Kreislauf 6. Zum Wasserdampf-Kreislauf 6 gehören wenigstens ein Vorwärmer 7, der das Speisewasser vorwärmt, ein Dampferzeuger 8 zum Verdampfen des Speisewassers, sowie ein Überhitzer 9, der den Dampf überhitzt. Der Vorwärmer 7, der Dampferzeuger 8 und der Überhitzer 9 sind in Form von Wärmetauschern ausgeführt. Das Wärmeträgerfluid strömt dabei im Gegenstrom zum Wasser-Dampf-Kreislauf durch den Wärmetauscher. Das Wärmeträgerfluid strömt dabei im Gegenstrom zum Wasser-Dampf-Kreislauf durch den Wärmetauscher. Das Wärmeträgerfluid hat am Eintritt zum Überhitzer die höchste Temperatur. Nacheinander durchströmt das Wärmeträgerfluid dann den Verdampfer und den Vorwärmer und verliert dabei immer mehr Wärmeenergie und Temperatur. Nachdem das Wärmeträgerfluid den Vorwärmer verlassen hat strömt es, eventuell über einen zusätzlichen Speicher, zurück zur Parabolrinnenordnung 2 wo es erneut erhitzt wird und Wärmeenergie aufnimmt.

Als Überhitzer wird dabei ein Wärmetauscherapparat oder der Teil eines Wärmetauscherapparates betrachtet, welcher das Temperaturniveau des Dampfes über die zum jeweiligen Druck gehörige Sattdampftemperatur hinaus anhebt.

Als Verdampfer wird ein Wärmetauschapparat oder ein Teil eines Wärmetauschapparates betrachtet, welcher den Phasenübergang von flüssigem auf dampfförmiges Wasser bewirkt.

Als Vorwärmer wird ein Wärmetauschapparat oder ein Teil eines Wärmetauschapparates betrachtet, welcher das Temperaturniveau des Speisewassers erhöht, insbesondere bis zu der zum jeweiligen Druck gehörenden Sattdampftemperatur.

Für den Fall einer überkritischen Betriebsweise der Anlage ist der Verdampfer derjenige Wärmetauscherapparat oder Teil desselben, in welchem die kritische Temperatur des Wassers überschritten wird. Überhitzer und Vorwärmer sind dem Verdampfer dampfseitig nach- bzw. vorgeschaltet.

Wie in Figur 1 zu erkennen ist, werden der Überhitzer, der Dampferzeuger und der Vorwärmer hintereinander (in Reihe) vom Wärmeträgerfluid durchströmt. Nachteilig an dieser Lösung ist, dass das Temperaturniveau des Fluids nicht optimal an den Wasser-Dampf-Kreislauf der Dampfturbine angepasst ist. Dies steht einer möglichen Druckerhöhung und damit Wirkungsgraderhöhung auf der Dampfseite entgegen. Weiterhin ist es notwendig, den Gesamtmassenstrom des Wärmeträgerfluids auf die hohe Eingangstemperatur am Überhitzer zu erwärmen. Dies ist besonders nachteilig, da sich mit zunehmendem Temperaturniveau die thermischen Verluste des Wärmeträgerfluids im Solarfeld (Wärmestrahlung, unvermeidbare Wärmeleitung) erhöhen.

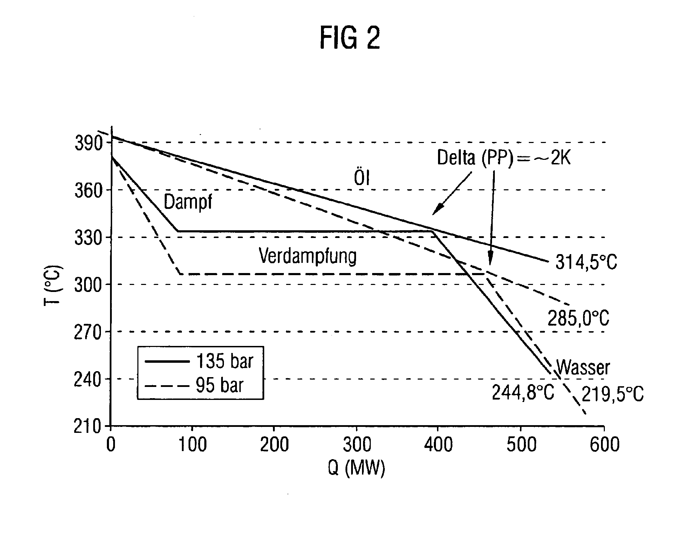

Aus dem Diagramm in Figur 2 ist erkennbar, dass für eine Erhöhung des Dampfdruckes von 95 bar auf 135 bar die untere Temperatur des Wärmefluid von 285 °C auf 314,5 °C ansteigen muss. Eine solche Erhöhung ist jedoch aufgrund der thermischen Verluste kaum zu realisieren.

Es ist bekannt, solarthermische Kraftwerke mit einer (mittels Wärmeträger) solar beheizten Zwischenüberhitzung auszuführen. Auch hier können sich Nachteile aus einer Wärmebereitstellung auf einem einzigen Temperaturniveau ergeben.

$$„\text{Wärmebereitstellungsaufgabe}“ = \begin{cases} \text{Dampferzeugung} \\ \text{Zwischenüberhitzung} \end{cases}$$

Aufgabe der Erfindung ist es daher, ein aus dem Stand der Technik bekanntes solarthermisches Kraftwerk so zu verbessern, dass eine Wirkungsgraderhöhung erzielt wird.

Die Aufgabe wird durch die Merkmale des unabhängigen Patentanspruchs 1 gelöst.

Weitere Vorteile der Erfindung, die einzeln oder in Kombination miteinander einsetzbar sind, sind Gegenstand der Unteransprüche.

Das erfindungsgemäße solarthermische Kraftwerk, umfassend ein Wärmeträgerfluid als Wärmeträger, dem durch Sonnenstrahlung Wärmeenergie zuführbar ist und welches zumindest einen Teil der Wärmeenergie an einen Wasser-/Dampf-Kreislauf einer Dampfturbine abgeben kann, zeichnet sich dadurch aus, dass wenigstens zwei Kreisläufe für das Wärmeträgerfluid vorgesehen sind, in denen das Wärmeträgerfluid zirkuliert und die Wärmeenergie an den Wasser-Dampf-Kreislauf der Dampfturbine abgibt, wobei die wenigsten zwei Kreisläufe unterschiedliche Temperaturniveaus aufweisen, der Gestalt, dass die obere und/oder untere Temperatur in den zwei Kreisläufen sich voneinander unterscheidet.

Durch die Verwendung von wenigstens zwei Kreisläufen für das Wärmeträgerfluid kann der Gesamtmassenstrom auf zwei Kreisläufe aufgeteilt werden. Hierdurch muss lediglich der Massenstrom, welcher dem Überhitzer zugeführt wird auf die maximale Temperatur erwärmt werden. Das Wärmeträgerfluid welches im zweiten Kreislauf zirkuliert muss lediglich auf die für den Verdampfter und/oder den Vorwärmer notwendige Temperatur gebracht werden. Durch die Aufteilung des Gesamtmassenstroms auf zwei Kreisläufe ergibt sich eine energetisch günstigere Ausbildung. Die Wärmetauscher für den Überhitzer, den Verdampfer und den Vorwärmer sind dabei nicht wie im Stand der Technik in Reihe geschaltet. Vielmehr ergibt sich eine Parallelschaltung zweier Kreisläufe, wobei an einen ersten Kreislauf zumindest der Wärmetauscher des Überhitzers und an den zweiten Kreislauf wenigstens der Wärmetauscher des Vorwärmers angeschlossen ist. Der Verdampfer kann sowohl an den ersten, den zweiten oder alle beiden Kreisläufe angeschlossen sein. Die Parallelschaltung erlaubt eine bessere Ausnutzung des verfügbaren Temperaturniveaus, eine Druckerhöhung im Wasser-Dampf-Kreislauf und damit eine Erhöhung des Kreislaufswirkungsgrades. Als parallele Kreisläufe unterschiedlichen Temperaturniveaus gelten dabei Kreisläufe, bei denen mindestens eine Leitung des ersten Kreislaufes auf einem anderen Temperaturniveau als die entsprechende Leitung des zweiten Kreislaufes betrieben wird. Eine gemeinsame Führung der Teilmassenströme in weiteren Leitungen und im Bereich der Wärmetauscher ist nicht schädlich.

Bei der erfindungsgemäßen Lösung werden (bei unterschiedlichem oberem Temperaturniveau) die Wärmeverluste im Solarfeld reduziert, in dem das mittlere Temperaturniveau des Wärmeträgerfluids reduziert wird. Die maximale Temperatur wird nur für einen Teil des Wärmeträgerfluids benötigt. In jedem Fall wird das Temperaturniveau des Wärmeträgerfluids dem Wärmebedarf im Wasser-Dampf-Kreislauf angepasst.

Um die wenigsten zwei Kreisläufe für das Wärmeträgerfluid auf unterschiedlichen Temperaturniveaus betreiben zu können, kann die Anzahl der verwendeten Spiegelreihen im Solarfeld variiert werden. Für unterschiedliche obere Temperaturniveaus in den Kreisläufen kann beispielsweise eine erste Anzahl von Spiegelreihen (Loops) an eine erste Wärmeträgerleitung des ersten Kreislaufs angeschlossen werden und eine zweite Anzahl von Spiegelreihen an eine zweite Wärmeträgerleitung des zweiten Kreislaufs angeschlossen werden. Dabei hat die erste Anzahl von Spiegelreihen eine höhere spezifische Spiegelfläche pro durchgesetzter Einheit des Wärmeträgerfluids als die zweite Anzahl von Spiegelreihen. Dies kann durch verschiedene Maßnahmen erreicht werden, z. B. durch eine permanente oder zeitweise Verschaltung von mehr Spiegelflächen zu den heißen Spiegelreihen oder durch eine Reduzierung des Durchsatzes an Wärmeträgerfluid. Auch können Spiegelreihen wahlweise auf die heiße oder die weniger heiße Wärmeträgerleitung geschaltet werden.

In analoger Weise kann für unterschiedliche untere Temperaturniveaus, in den wenigstens zwei Kreisläufen, eine höhere spezifische Spiegelfläche pro durchgesetzter Einheit des Wärmeträgerfluids eingesetzt werden.

Es sind weitere Ausgestaltungen denkbar, bei denen beide Kreisläufe die gleiche spezifische Spiegelfläche besitzen, jedoch auf unterschiedlichen Temperaturniveaus arbeiten (anderes oberes und unteres Temperaturniveau).

Eine vorteilhafte Ausgestaltung der Erfindung sieht vor, dass die Temperaturniveaus in den wenigstens zwei Kreisläufen, derart ausgelegt sind, dass der Exergieverlust in den Kreisläufen jeweils ein Minimum erreicht. Hierdurch ergibt sich der größtmögliche Wirkungsgrad des solarthermischen Kraftwerkes, da die thermischen Verluste im Solarfeld minimiert werden.

Eine weitere vorteilhafte Ausgestaltung der Erfindung sieht vor, dass die Wärmeenergie vom Wärmeträgerfluid mittels Wärmetauscher an den Wasser-Dampf-Kreislauf der Dampfturbine übertragen werden. Die Wärmetauscher werden dabei vorzugsweise im Gegenstrom zum Wasser-Dampf-Kreislauf gefahren. Die Wärmetauscher ermöglichen eine besonders einfache Abgabe der Wärmeenergie vom Wärmeträgerfluid an den Wasser-Dampf-Kreislauf. Durch die Verwendung von Wärmetauschern wird auf besonders einfache und sichere Weise vermieden, dass Wärmeträgerfluid in den Wasser-Dampf-Kreislauf der Dampfturbine gelangt, was unter allen Umständen zu vermeiden ist, da dies zu Beschädigungen an der Dampfturbine führen würde.

Eine besonders vorteilhafte Ausgestaltung der Erfindung sieht vor, dass das solarthermische Kraftwerk zumindest einen Wärmetauscher für die Vorwärmung des Wassers im Wasser-Dampf-Kreislauf, einen zweiten Wärmetauscher für die Dampferzeugung im Wasser-Dampf-Kreislauf und wenigstens einen dritten Wärmetauscher für die Überhitzung des Dampfes im Wasser-Dampf-Kreislauf umfasst. Durch die Verwendung der wenigstens drei Wärmetauscher kann für eine sichere Erwärmung, Verdampfung und Überhitzung des Dampfes im Wasser-Dampf-Kreislauf der Dampfturbine gesorgt werden und so ein sicherer Betrieb gewährleistet werden.

Eine weitere vorteilhafte Ausgestaltung der Erfindung sieht vor, dass die Verteilung/Aufteilung der Wärmemenge, die dem Wasser-Dampf-Kreislauf über das Wärmeträgerfluid zugefügt wird, in Abhängigkeit vom Betriebszustand des solarthermischen Kraftwerks, insbesondere von der Sonneneinstrahlung, der Speicherbeladung und dem Leistungsbedarf, abhängig ist und entsprechend geregelt wird. Durch die betriebszustandsabhängige Aufteilung der Wärmemenge ergeben sich ein besonders energieeffizienter Betrieb des solarthermischen Kraftwerks und ein besonders hoher Wirkungsgrad für die einzelnen Betriebszustände.

Die hier zur Dampferzeugung getroffenen Aussagen gelten in analoger Weise für die Zwischenüberhitzung des Dampfes. Hier kann analog eine Aufteilung der Wärmebereitstellung auf zwei Kreisläufe unterschiedlicher Temperaturniveaus erfolgen, mit dem Ziel einer Wärmestromoptimierung/Minimierung der Wärmeverluste.

Es ist auch denkbar, die beiden Kreisläufe mit unterschiedlichen Wärmeträgermedien auszuführen. In diesem Fall wird vorteilhaft der Kreislauf mit dem höheren Temperaturniveau mit dem thermisch höher beanspruchbaren Wärmeträger betrieben. Auf diese Weise kann die obere Prozesstemperatur mit moderatem Aufwand gesteigert werden.

Zusammengefasst lässt sich feststellen, dass durch das neue erfindungsgemäße solarthermische Kraftwerk mit zwei Kreisläufen für das Wärmeträgerfluid, der Gesamtmassenstrom des Wärmeträgermediums aufgeteilt werden kann zu mehreren Teilmassenströmen, die dann entsprechend ihrer Verwendung auf unterschiedliche Temperaturniveaus gebracht werden können. Durch die Verwendung der zwei Kreisläufe kann ein Teilmassenstrom mit hoher Temperatur für die Überhitzung des Dampfes und zur Verdampfung des Wassers genutzt werden, ein zweiter mit niedrigerer Temperatur dient zur Verdampfung und/oder zur Speisewassererwärmung. Durch diese Maßnahmen lassen sich die thermischen Verluste im Solarfeld deutlich reduzieren sodass eine Erhöhung des Drucks im Wasser-Dampf-Kreislauf ermöglicht wird und der Gesamtwirkungsgrad ansteigt.

Ein Ausführungsbeispiels sowie weitere Vorteile der Erfindung werden im Folgenden anhand der Figuren erläutert. Es zeigt:

Figur 1    den prinzipiellen Aufbau eines solarthermischen Kraftwerks nach dem Stand der Technik;

Figur 2    ein Diagramm bei dem der Wärmestrom über der Temperatur aufgetragen ist, sowohl für das Wärmeträgerfluid als auch für das Wasser/den Dampf im Wasser-Dampf-Kreislauf, für ein in Figur 1 dargestelltes solarthermisches Kraftwerk;

Figur 3    den prinzipiellen Aufbau eines erfindungsgemäßen solarthermischen Kraftwerkes, wobei auf die Darstellung der Dampfturbine verzichtet wurde (entspricht dem Aufbau entsprechend Fig. 1);

Figur 4    ein Diagramm bei dem der Wärmestrom über der Temperatur aufgetragen ist, sowohl für das Wärmeträgerfluid als auch für das Wasser/den Dampf im Wasser-Dampf-Kreislauf, für ein in Figur 3 dargestelltes solarthermischen Kraftwerk.

Die Figuren zeigen lediglich eine schematische Darstellung. Gleiche bzw. funktionsgleiche Bauteile sind figurübergreifend mit denselben Bezugszeichen versehen.

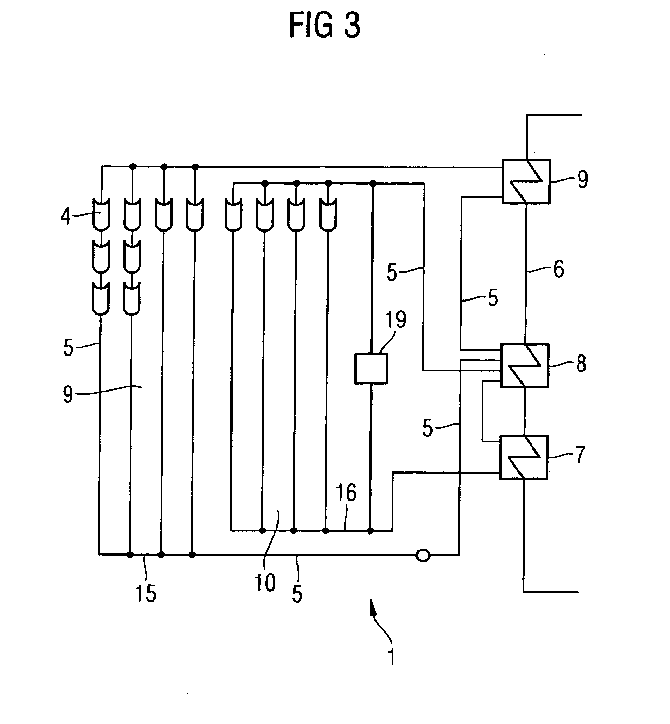

Figur 3 zeigt den schematischen Aufbau eines erfindungsgemäßen solarthermischen Kraftwerks. Das solarthermische Kraftwerk 1 ist dabei nur insoweit dargestellt, wie es für das Verständnis der Erfindung notwendig ist. Aus diesem Grund ist auf die Darstellung des Dampfturbosatzes (Dampfturbine) verzichtet worden. Es wird lediglich der Teil des Wasser-Dampf-Kreislauf 6 gezeigt, der mit dem Wärmeträgerfluid in Wirkverbindung steht. Der vollständige Aufbau des Dampfturbinensatzes und der dazugehörigen Vorrichtung kann aus Figur 1 entnommen werden.

Das solarthermische Kraftwerk 1 weist zwei Solarfelder 9, 10 auf, die jeweils eine Vielzahl von Spiegelreihen (Loops) aufweist. Die Spiegel 4 sind in Parabolrinnen-Bauweise ausgeführt und im Brennpunkt der Parabolrinnen ist eine Wärmeträgerleitung 5 angeordnet. Die Parabolrinnen werden dem Sonnenstand nachgeführt, so dass stets eine optimale Einstrahlung erzielt wird. In den Wärmeträgerleitungen 5 zirkuliert ein Wärmeträgerfluid. Als Wärmeträgerfluid eignet sich je nach Einsatztemperatur Öl (Temperaturen bis 400 °C) oder schmelzflüssiges Salz (Temperaturen über 400 °C). Die beiden Solarfelder 9 und 10 sind mit getrennten Wärmeträgerleitungen 5 ausgebildet und bilden daher zwei voneinander getrennte Kreisläufe. Dabei weisen die zwei Kreisläufe unterschiedliche Temperaturniveaus auf, in der Gestalt, dass die obere und/oder untere Temperatur in den zwei Kreisläufen sich voneinander unterscheiden. Die beiden Kreisläufe stehen mit dem Wasser-Dampf-Kreislauf 6 der Dampfturbine in Wirkverbindung. Das heißt, dass das Wärmeträgerfluid einen gewissen Wärmestrom an den Wasser-Dampf-Kreislauf der Dampfturbine abzugeben vermag.

Die Wärmemenge bzw. der Wärmestrom der den Wasser-Dampf-Kreislauf 6 über das Wärmeträgerfluid zugeführt wird, wird dabei in Abhängigkeit vom Betriebszustand des solarthermischen Kraftwerks, insbesondere von der Sonnenstrahlung, der Speicherbeladung und dem Leistungsbedarf abhängig gemacht und entsprechend geregelt.

Das Temperaturniveau in den beiden Kreisläufen ist so ausgelegt, dass der Exergieverlust in den Kreisläufen jeweils ein Minimum annimmt, dies bedeutet, dass die thermischen Verluste im Solarfeld (Wärmestrahlung, unvermeidbare Wärmeleitung) so gering wie möglich gehalten werden. Dies wird erreicht, in dem nur die Wärmeträgerfluidmenge, die in dem jeweiligen Kreislauf benötigt wird, auf die entsprechende Temperatur erhitzt wird. So kann beispielsweise wie in Figur 3 dargestellt, im ersten Solarfeld 9, das Wärmeträgerfluid auf eine für die Verdampfung und Überhitzung notwendige hohe Temperatur erwärmt werden und die Temperatur im zweiten Solarfeld 10 auf eine niedrigere Temperatur, wie sie für die Vorwärmung und Verdampfung ausreicht, erwärmt werden.

Die zwei Kreisläufe für das Wärmeträgerfluid sind in dem Ausführungsbeispiel so ausgebildet, dass der erste Kreislauf 15 auf einem höheren Temperaturniveau arbeitet, als der zweite Kreislauf 16. Dabei ist insbesondere die obere Temperatur des ersten Kreislaufs 15 höher als die obere Temperatur des zweiten Kreislaufs 16.

Der erste Kreislauf 15 ist so mit dem Wasser-Dampf-Kreislauf 6 der Dampfturbine verbunden, dass das Wärmeträgerfluid zunächst in den Wärmetauscher 9, welcher für die Überhitzung des Frischdampfes verantwortlich ist, gelangt. Hier gibt er Wärmeenergie an den im Wasser-Dampf-Kreislauf 6 strömenden Dampf ab und sorgt so für die Überhitzung des Dampfes. Nachdem er ein Teil seiner Wärmeenergie abgegeben hat, verlässt er den Wärmetauscher 9. Nachfolgend wird das Wärmeträgerfluid zum Wärmetauscher 8, der für die Verdampfung des Wassers im Wasser-Dampf-Kreislauf 6 verantwortlich ist, geführt. Die Wärmeenergie des Wärmeträgerfluids reicht hier noch aus, um einen Teil des Wassers im Wasser-Dampf-Kreislauf 6 zu verdampfen. Nachdem das Wärmeträgerfluid den Wärmetauscher 8 passiert hat, gelangt es von dort wieder zurück in das Solarfeld 9 und wird dort erneut erhitzt. Der zweite Kreislauf 16 ist so ausgeführt, dass das Wärmeträgerfluid zunächst in den Wärmetauscher 8, welcher für die Verdampfung des Wassers im Wasser-Dampf-Kreislauf 6 verantwortlich ist, gelangt. Die obere Temperatur des zweiten Kreislaufs 16 ist so gewählt, dass die Temperatur entsprechend hoch ist. Dabei kann die obere Temperatur des zweiten Kreislaufes 16 entweder genauso hoch wie die Eintrittstemperatur des ersten Kreislaufs 15 in den Wärmetauscher 8 sein oder auch etwas drunter oder auch drüber liegen. Im Wärmetauscher 8 gibt das Wärmeträgerfluid des zweiten Kreislaufes 16 Wärmeenergie an den Wasser-Dampf-Kreislauf ab und kühlt dabei ab. Nachdem es den Wärmetauscher 8 verlassen hat, wird es in den Wärmetauscher 7, welcher für die Vorerwärmung des Wassers im Wasser-Dampf-Kreislauf 6 verantwortlich ist, geleitet. Die Wärmeenergie des Wärmeträgerfluids wird sodann für die Erwärmung des Speisewassers im Wasser-Dampf-Kreislauf 6 genutzt. Anschließend verlässt das Wärmeträgerfluid abgekühlt den Wärmetauscher 7 und wird zurück zum Solarfeld 10 des zweiten Kreislaufes 16 geführt, wo es erneut erwärmt wird.

Für die Realisierung der unterschiedlichen oberen Temperaturniveaus in beiden Kreisläufen 15, 16 kann eine erste Anzahl von Spiegelreihen an die erste Wärmeträgerleitung angeschlossen werden und eine zweite Anzahl von Spiegelreihen an die zweite Wärmeträgerleitung. Dabei hat die erste Anzahl von Spiegelreihen eine höhere spezifische Spiegelfläche pro durchgesetzter Einheit an Wärmeträgerfluid als die zweite Anzahl von Spiegelreihen. Dies kann durch verschiedene Maßnahmen erreicht werden, zum Beispiel durch eine permanente oder zeitweise Verschaltung mehrerer Spiegelflächen zu den heißen Spiegelreihen oder durch eine Reduzierung des Durchsatzes an Wärmeträgerfluid. Auch können Spiegelreihen wahlweise auf die heiße oder weniger heiße Wärmeträgerleitung geschaltet werden. In analoger Weise kann für unterschiedliche untere Temperaturniveaus eine höhere spezifische Spiegelfläche pro durchgesetzter Einheit des Wärmeträgerfluids eingesetzt werden.

Es sind weitere Ausgestaltungen denkbar, bei denen beide Zweige die gleiche spezifische Spiegelfläche besitzen, jedoch auf unterschiedlichen Temperaturniveaus arbeiten (anderes, oberes und unteres Temperaturniveau).

In einer weiteren Ausgestaltung kann ein Wärmeträgerfluid, welches von einer Erwärmung aus einem Wärmespeicher kommend heranströmt (und auf Grund von Grädigkeit der beteiligten Wärmetauscher naturgemäß ein niedrigeres Temperaturniveau besitzt), bevorzugt in den Kreislauf mit dem geringeren oberen Temperaturniveau eingespeist wird.

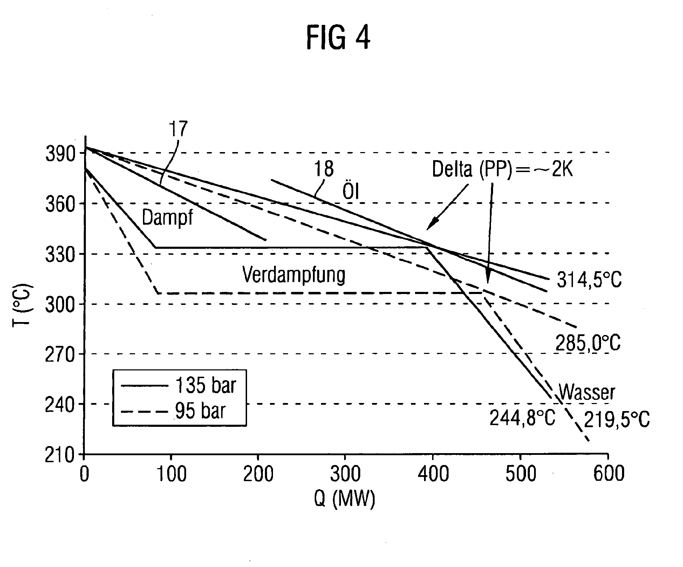

Figur 4 zeigt ein Diagramm, bei dem der Wärmestrom über der Temperatur sowohl für das Wärmeträgerfluid als auch für das Wasser/Dampf des Wasser-Dampf-Kreislaufes entsprechend eines solarthermischen Kraftwerks nach Figur 3 dargestellt ist. Die gestrichelten Linien stellen dabei den Verlauf für ein konventionelles solarthermisches Kraftwerk mit einem Dampfdruck von 95 bar dar. Das konventionelle Kraftwerk weist lediglich einen einzigen Kreislauf für das Wärmeträgerfluid auf. Im Gegensatz hierzu wird der Gesamtmassenstrom des Wärmeträgerfluids für ein solarthermisches Kraftwerk entsprechend der Erfindung in zwei Teilmassenströme 17 und 18 aufgeteilt. Der Teilmassenstrom 17 des ersten Kreislaufs 15 weist ein höheres Temperaturniveau auf, als der Teilmassenstrom 18 des zweiten Kreislaufs 16. Lediglich der Teilmassenstrom 17, des ersten Kreislaufes 15 muss auf die für die Überhitzung des Dampfes notwendige Temperatur von über 390 °C erwärmt werden. Der zweite Teilmassenstrom 18 ist dagegen nur für einen Teil der Verdampfung, sowie für die Erwärmung des Speisewassers notwendig und kann deswegen auf eine geringere Temperatur (ca. 370 °C) erwärmt werden. Durch die Aufteilung des Gesamtmassenstroms in die Teilmassenströme 17 und 18 ergibt sich ein energetisch günstigerer Betrieb. Die beiden Teilmassenströme 17 und 18 sind dabei derart ausgelegt, dass der Exergieverluste in den Kreisläufen jeweils ein Minimum annehmen. Aufgrund der Ausbildung von zwei getrennten (parallelen) Kreisläufen für das Wärmeträgerfluid ergibt sich eine bessere Ausnutzung des verfügbaren Temperaturniveaus wodurch eine Druckerhöhung im Wasser-Dampf-Kreislauf ermöglicht wird, die eine Erhöhung des Kreislaufwirkungsgrades ergibt.

Zusammenfassend lässt sich somit feststellen, dass das erfindungsgemäße solarthermische Kraftwerk durch die Ausbildung zweier Kreisläufe für das Wärmeträgerfluid geringere thermische Verluste im Solarfeld mit sich bringt, wodurch sich eine bessere Ausnutzung des verfügbaren Temperaturniveaus, eine Druckerhöhung im Wasser-Dampf-Kreislauf und damit eine Erhöhung des Kreislaufwirkungsgrades ergibt.

## Patentansprüche

1.  Solarthermisches Kraftwerk (1), umfassend ein Wärmeträgerfluid als Wärmeträger, dem durch Sonnenstrahlung Wärmeenergie zuführbar ist und welches zumindest einen Teil der Wärmeenergie, an einen Wasser-Dampf-Kreislauf (6) einer Dampfturbine abgeben kann, **dadurch gekennzeichnet**, wenigstens zwei Kreisläufe (15, 16) für das Wärmeträgerfluid vorgesehen sind, in denen das Wärmeträgerfluid zirkuliert und dabei Wärmeenergie an den Wasser-Dampf-Kreislauf (6) der Dampfturbine abgibt, wobei die wenigstens zwei Kreisläufe (15, 16) unterschiedliche Temperaturniveaus aufweisen, dergestalt, dass die oberen und/oder unteren Temperaturen (T) in den zwei Kreisläufen (15, 16) sich voneinander unterscheiden.

2.  Solarthermisches Kraftwerk (1) nach Anspruch 1, **dadurch gekennzeichnet, dass** die Temperaturniveaus in den wenigstens zwei Kreisläufen (15, 16) derart ausgelegt sind, dass der Exergieverlust in den wenigstens zwei Kreisläufen (15, 16) jeweils ein Minimum annimmt.

3.  Solarthermisches Kraftwerk (1) nach Anspruch 1 oder 2, **dadurch gekennzeichnet, dass** die Wärmeenergie vom Wärmeträgerfluid mittels Wärmetauscher (7, 8, 9) an den Wasser-Dampf-Kreislauf (6) der Dampfturbine übertragen wird.

4.  Solarthermisches Kraftwerk (1) nach Anspruch 3, **dadurch gekennzeichnet, dass** das solarthermische Kraftwerk (1) einen Wärmetauscher (7) für die Vorwärmung des Wassers im Wasser-Dampf-Kreislauf (6), einen Wärmetauscher (8) für die Dampferzeugung im Wasser-Dampf-Kreislauf (6) und einen Wärmetauscher (9) für die Überhitzung des Dampfes im Wasser-Dampf-Kreislauf (6) umfasst.

5.  Solarthermisches Kraftwerk (1) nach einem der vorherigen Ansprüche, **dadurch gekennzeichnet, dass** das solarthermische Kraftwerk (1) einen Wärmespeicher (19) zum Speichern von Wärmeenergie aufweist und Wärmeenergie im Bedarfsfall an das Wärmeträgerfluid eines oder mehrerer Kreisläufe (15, 16), insbesondere an den Kreislauf (16) mit dem niedrigsten Temperaturniveau abgibt.

6.  Solarthermisches Kraftwerk (1) nach einem der vorherigen Ansprüche, **dadurch gekennzeichnet, dass** die Wärmemenge die dem Wasser-Dampf-Kreislauf (6) über das Wärmeträgerfluid zugeführt wird, in Abhängigkeit vom Betriebszustand des solarthermischen Kraftwerks (1), insbesondere von der Sonneneinstrahlung, der Speicherbeladung und dem Leistungsbedarf, geregelt wird.

## Claims

1.  Solar thermal power plant (1), comprising a heat transfer fluid as heat transfer medium, to which heat energy can be supplied by solar radiation and which can transfer at least part of the heat energy to a water-steam circuit (6) of a steam turbine, **characterized in that** at least two circuits (15, 16) for the heat transfer fluid are provided, in which the heat transfer fluid circulates and at the same time transfers heat energy to the water-steam circuit (6) of the steam turbine, the at least two circuits (15, 16) having different temperature levels, in such a way that the upper and/or lower temperatures (T) in the two circuits (15, 16) differ from one another.

**2.** Solar thermal power plant (1) according to Claim 1, **characterized in that**
the temperature levels in the at least two circuits (15, 16) are designed in such a way that the exergy loss in the at least two circuits (15, 16) in each case assumes a minimum.

**3.** Solar thermal power plant (1) according to Claim 1 or 2, **characterized in that** the heat energy is transmitted from the heat transfer fluid to the water-steam circuit (6) of the steam turbine by means of heat exchangers (7, 8, 9).

**4.** Solar thermal power plant (1) according to Claim 3, **characterized in that**
the solar thermal power plant (1) comprises a heat exchanger (7) for preheating the water in the water-steam circuit (6), a heat exchanger (8) for steam generation in the water-steam circuit (6) and a heat exchanger (9) for superheating the steam in the water-steam circuit (6).

**5.** Solar thermal power plant (1) according to one of the preceding claims,
**characterized in that**
the solar thermal power plant (1) has a heat accumulator (19) for the storage of heat energy and, as required transfers heat energy to the heat transfer fluid of one or more circuits (15, 16), in particular to the circuit (16) having the lowest temperature level.

**6.** Solar thermal power plant (1) according to one of the preceding claims,
**characterized in that**
the heat quantity which is supplied to the water-steam circuit (6) via the heat transfer fluid is regulated as a function of the operating state of the solar thermal power plant (1), in particular of the solar radiation, the accumulator charge and the power demand.

**Revendications**

**1.** Centrale héliothermique (1), comprenant comme caloporteur un fluide caloporteur auquel peut être amenée de l'énergie thermique par rayonnement solaire et qui peut restituer au moins une partie de l'énergie thermique à un circuit eau-vapeur (6) d'une turbine à vapeur,
**caractérisée en ce qu'**il est prévu au moins deux circuits (15, 16) de fluide caloporteur, dans lesquels le fluide caloporteur circule et restitue de l'énergie thermique au circuit eau-vapeur (6) de la turbine à vapeur, les au moins deux circuits (15, 16) présentant des niveaux de température différents de sorte que les températures haute et/ou basse (T) dans les deux circuits (15, 16) sont différentes l'une de l'autre.

**2.** Centrale héliothermique (1) selon la revendication 1, **caractérisée en ce que** les niveaux de température dans les au moins deux circuits (15, 16) sont étudiés pour que la perte d'énergie dans chacun des au moins deux circuits (15, 16) atteigne un minimum.

**3.** Centrale héliothermique (1) selon la revendication 1 ou 2, **caractérisée en ce que** l'énergie thermique est transmise du fluide caloporteur au circuit eau-vapeur (6) de la turbine à vapeur au moyen d'échangeurs de chaleur (7, 8, 9).

**4.** Centrale héliothermique (1) selon la revendication 3, **caractérisée en ce que** la centrale héliothermique (1) comprend un échangeur de chaleur (7) pour le préchauffage de l'eau dans le circuit eau-vapeur (6), un échangeur de chaleur (8) pour la production de vapeur dans le circuit eau-vapeur (6) et un échangeur de chaleur (9) pour la surchauffe de la vapeur dans le circuit eau-vapeur (6).

**5.** Centrale héliothermique (1) selon l'une des revendications précédentes, **caractérisée en ce que** la centrale héliothermique (1) comporte un accumulateur de chaleur (19) pour accumuler de l'énergie thermique et, si cela est nécessaire, restitue de l'énergie thermique au fluide caloporteur d'un ou de plusieurs circuits (15, 16), en particulier au circuit (16) présentant le niveau de température le plus bas.

**6.** Centrale héliothermique (1) selon l'une des revendications précédentes, **caractérisée en ce que** la quantité de chaleur amenée au circuit eau-vapeur (6) par l'intermédiaire du fluide caloporteur est réglée en fonction de l'état de fonctionnement de la centrale héliothermique (1), en particulier en fonction du rayonnement solaire, du chargement de l'accumulateur et des besoins en énergie.

# FIG 1

EP 2 638 286 B1

# FIG 2

# FIG 3

# FIG 4

**EP 2 638 286 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009056707